# EUROPEAN PATENT APPLICATION

(11) **EP 4 597 813 A1**
(43) Date of publication of application: **06.08.2025**
(21) Application number: 25153988.8
(22) Date of filing: 27.01.2025
(51) Int. Cl.: H02M 1/00, H02M 1/42, H02M 3/00, H02M 3/335, H05G 1/10, H05G 1/12, H02M 1/32

(54) **CAPACITOR CHARGING CIRCUIT, HIGH-VOLTAGE GENERATOR AND DIGITAL X-RAY IMAGING SYSTEM**

(30) Priority: 26.01.2024 CN 202410112612
(71) Applicant: Shenzhen Mindray Bio-Medical Electronics Co., Ltd., Shenzhen, Guangdong 518057 (CN)
(72) Inventor: HUANG, Jianhua, Shenzhen 518057 (CN); LIAN, Ronghui, Shenzhen 518057 (CN); LUO, Xuanhui, Shenzhen 518057 (CN)
(74) Representative: KIPA AB

(57) **Abstract**

A capacitor charging circuit, a high-voltage generator and a digital X-ray imaging system are provided. A power factor correction converter is provided at the input end of the high-voltage generator to increase the range of the inputted AC voltage. Furthermore, the resonance circuit is designed as a parallel resonance circuit to achieve soft switching of the switch tube within a certain frequency range. On this basis, a clamping circuit is provided to perform voltage clamping, such that the switch tube works at zero voltage switching at any frequency, thereby improving the reliability of the switch tube and thereby improving the electromagnetic compatibility performance of the overall circuit.

## Description

### TECHNICAL FIELD

The present disclosure relates to high-power pulse energy technology, and particularly to a capacitor charging circuit, a high-voltage generator and a digital X-ray imaging system.

### BACKGROUND

Large-capacity capacitors are often used for energy storage in electrical applications, such as the high-voltage generator of a digital X-ray imaging system. In the high-voltage generator, the large-capacity capacitor needs to be charged first, and then the large-capacity capacitor provides high-power pulse energy to the X-ray source to achieve exposure.

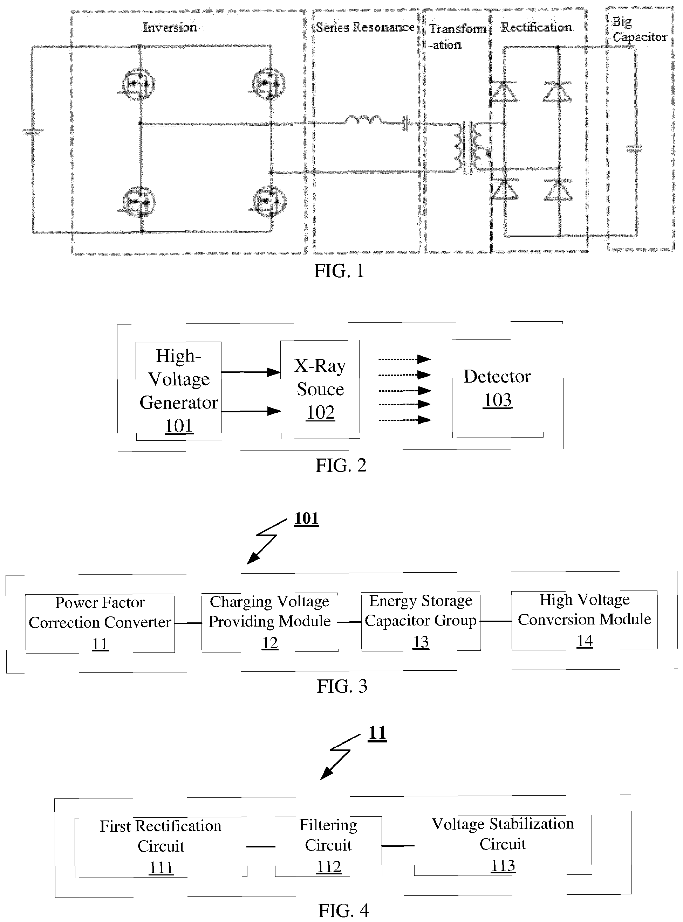

Referring to FIG. 1, the principle of charging the large-capacity capacitor in existing technology is to invert, resonate in series, transform and rectify the inputted AC signal and then output the signal for charging to the capacitor for energy storage. However, this solution has some shortcomings.
(1) The high-voltage generator of the digital X-ray imaging system is usually only adapted to the voltage input of 220VAC±10%, while the voltage output of most power grids in the world is 100 VAC-240VAC. If the high-voltage generator is desired to adapt to the voltage of the power grid in the world (such as 110 VAC), an additional AC-AC converter is required for voltage regulation;
(2) If the soft switching of the switch tube in the inversion circuit in FIG. 1 is to be achieved, there will be higher requirement for the switching frequency of the load and the switch tube. So, a full-band soft switching cannot be achieved. Therefore, the reliability of the switch tube in the inversion circuit in FIG. 1 is poor;
(3) Since the high voltage obtained by the series resonance and transformation in FIG. 1 radiates a large amount of radiation to the surrounding circuits, the overall electromagnetic compatibility performance of the circuit is poor.

### SUMMARY

In view of the above problems, the present disclosure proposes a capacitor charging circuit, a high-voltage generator and a digital X-ray imaging system, which are described in detail below.

In one embodiment, a high-voltage generator for a digital X-ray imaging system is provided, which may include:
a power factor correction converter configured to perform a power factor correction conversion on an inputted AC signal to output a first DC signal;
a charging voltage providing module configured to perform a first voltage conversion on the first DC signal to output a second DC signal;
an energy storage capacitor group configured to store energy for the second DC signal to provide a third DC signal; and
a high voltage conversion module configured to obtain the third DC signal from the energy storage capacitor group and perform a second voltage conversion on the third DC signal to obtain a high voltage signal, wherein the high voltage signal is loaded to an X-ray source to make the X-ray source to transmit X-rays.

In one embodiment, the power factor correction converter includes:
a first rectification circuit configured to rectify the inputted AC signal;
a filtering circuit configured to filter the rectified signal; and
a voltage stabilization circuit configured to stabilize the filtered signal to output the first DC signal.

In one embodiment, the charging voltage providing module includes:
an inversion circuit configured to invert the first DC signal to output a first AC signal;
a parallel resonance circuit connected to an output end of the inversion circuit and configured to amplify the first AC signal of a certain frequency band;
a transformer circuit configured to boost a signal outputted by the parallel resonance circuit; and
a second rectification circuit configured to rectify the boosted signal to output the second DC signal.

In one embodiment, the inversion circuit is a half-bridge inversion circuit; the inversion circuit has an output end; the parallel resonance circuit comprises a resonance inductor L1 and a resonance capacitor C1; one end of the resonance inductor L1 is connected to the output end of the inversion circuit, the other end of the resonance inductor L1 is connected to one end of the resonance capacitor C1, and the other end of the resonance capacitor C1 is connected to a ground; and the end of the resonance inductor L1 connected to the resonance capacitor C1 outputs an amplified high-frequency AC voltage signal.

Alternatively, the inversion circuit is a full-bridge inversion circuit; the inversion circuit has a positive output end and a negative output end; the parallel resonance circuit includes a resonance inductor L1, a resonance inductor L2, a resonance capacitor C1 and a resonance capacitor C2; one end of the resonance inductor L1 is connected to the positive output end of the inversion circuit, the other end of the resonance inductor L1 is connected to one end of the resonance capacitor C1, and the other end of the resonance capacitor C1 is connected to a ground; one end of the resonance inductor L2 is connected to the negative output end of the inversion circuit, the other end of the resonance inductor L2 is connected to one end of the resonance capacitor C2, and the other end of the resonance capacitor C2 is connected to a ground; and, the end of the resonance inductor L1 connected to the resonance capacitor C1 outputs a positive amplified high-frequency AC voltage signal, and the end of the resonance inductor L2 connected to the resonance capacitor C2 outputs a negative amplified high-frequency AC voltage signal.

In one embodiment, the charging voltage providing module further includes:
a clamping circuit configured to clamp a voltage of the first AC signal to a preset voltage.

In one embodiment, the inversion circuit is a half-bridge inversion circuit; and, the clamping circuit comprises a clamping diode Z1 and a clamping diode Z2, an anode of the clamping diode Z1 and a cathode of the clamping diode Z2 are connected to the output end of the inversion circuit or an output end of the parallel resonance circuit, a cathode of the clamping diode Z1 is connected to a positive bus, and an anode of the clamping diode Z2 is connected to a negative bus.

Alternatively, the inversion circuit is a full-bridge inversion circuit; and, the clamping circuit comprises a clamping diode Z1, a clamping diode Z2, a clamping diode Z3 and a clamping diode Z4, an anode of the clamping diode Z1 and a cathode of the clamping diode Z2 are connected to a positive output end of the inversion circuit or a positive output end of the parallel resonance circuit, a cathode of the clamping diode Z1 is connected to a positive bus, an anode of the clamping diode Z2 is connected to a negative bus, an anode of the clamping diode Z3 and a cathode of the clamping diode Z4 are connected to a negative output end of the inversion circuit or a negative output end of the parallel resonance circuit, a cathode of the clamping diode Z3 is connected to the positive bus, and an anode of the clamping diode Z4 is connected to the negative bus.

In one embodiment, a high-voltage generator for a digital X-ray imaging system is provided, which may include:
a voltage conversion module configured to convert an AC signal inputted into a first DC signal for output;
a charging voltage providing module configured to perform a first voltage conversion on the first DC signal to output a second DC signal; wherein, the charging voltage providing module comprises an inversion circuit, a parallel resonance circuit, a transformer circuit and a second rectification circuit;
the inversion circuit is configured to invert the first DC signal to output a first AC signal;
the parallel resonance circuit is connected to an output end of the inversion circuit and configured to amplify the first AC signal of a certain frequency band;
the transformer circuit is configured to boost a signal outputted by the parallel resonance circuit; and
the second rectification circuit is configured to rectify the boosted signal to output the second DC voltage signal;
an energy storage capacitor group configured to store energy for the second DC signal to provide a third DC signal; and
a high-voltage conversion module configured to obtain the third DC signal from the energy storage capacitor group and perform a second voltage conversion on the third DC signal to obtain a high-voltage signal that is loaded into the X-ray source to make the X-ray source to transmit X-rays.

In one embodiment, the inversion circuit is a half-bridge inversion circuit; the inversion circuit has an output end; the parallel resonance circuit comprises a resonance inductor L1 and a resonance capacitor C1; one end of the resonance inductor L1 is connected to the output end of the inversion circuit, the other end of the resonance inductor L1 is connected to one end of the resonance capacitor C1, and the other end of the resonance capacitor C1 is connected to a ground; and the end of the resonance inductor L1 connected to the resonance capacitor C1 outputs an amplified high-frequency AC voltage signal;

Alternatively, the inversion circuit is a full-bridge inversion circuit; the inversion circuit has a positive output end and a negative output end; the parallel resonance circuit includes a resonance inductor L1, a resonance inductor L2, a resonance capacitor C1 and a resonance capacitor C2; one end of the resonance inductor L1 is connected to the positive output end of the inversion circuit, the other end of the resonance inductor L1 is connected to one end of the resonance capacitor C1, and the other end of the resonance capacitor C1 is connected to a ground; one end of the resonance inductor L2 is connected to the negative output end of the inversion circuit, the other end of the resonance inductor L2 is connected to one end of the resonance capacitor C2, and the other end of the resonance capacitor C2 is connected to a ground; and, the end of the resonance inductor L1 connected to the resonance capacitor C1 outputs a positive amplified high-frequency AC voltage signal, and the end of the resonance inductor L2 connected to the resonance capacitor C2 outputs a negative amplified high-frequency AC voltage signal.

In one embodiment, the charging voltage providing module further includes:
a clamping circuit configured to clamp a voltage of the first AC signal to a preset voltage.

In one embodiment, the inversion circuit is a half-bridge inversion circuit; and, the clamping circuit comprises a clamping diode Z1 and a clamping diode Z2, an anode of the clamping diode Z1 and a cathode of the clamping diode Z2 are connected to the output end of the inversion circuit or an output end of the parallel resonance circuit, a cathode of the clamping diode Z1 is connected to a positive bus, and an anode of the clamping diode Z2 is connected to a negative bus;

Alternatively, the inversion circuit is a full-bridge inversion circuit; and, the clamping circuit comprises a clamping diode Z1, a clamping diode Z2, a clamping diode Z3 and a clamping diode Z4, an anode of the clamping diode Z1 and a cathode of the clamping diode Z2 are connected to a positive output end of the inversion circuit or a positive output end of the parallel resonance circuit, a cathode of the clamping diode Z1 is connected to a positive bus, an anode of the clamping diode Z2 is connected to a negative bus, an anode of the clamping diode Z3 and a cathode of the clamping diode Z4 are connected to a negative output end of the inversion circuit or a negative output end of the parallel resonance circuit, a cathode of the clamping diode Z3 is connected to the positive bus, and an anode of the clamping diode Z4 is connected to the negative bus.

In one embodiment, the voltage conversion module is a power factor correction converter.

In one embodiment, the power factor correction converter includes:
a first rectification circuit configured to rectify the inputted AC signal;
a filtering circuit configured to filter the rectified signal; and
a voltage stabilization circuit configured to stabilize the filtered signal to output the first DC signal.

In one embodiment, a capacitor charging circuit for charging capacitors in an energy storage capacitor group is provided, which may include:
a power factor correction converter configured to perform a power factor correction conversion on an inputted AC signal to output a first DC signal;
a charging voltage providing module configured to perform a first voltage conversion on the first DC signal to output a second DC signal to charge the capacitors in the energy storage capacitor group.

In one embodiment, the power factor correction converter includes:
a first rectification circuit configured to rectify the inputted AC signal;
a filtering circuit configured to filter the rectified signal; and
a voltage stabilization circuit configured to stabilize the filtered signal to output the first DC signal.

In one embodiment, the charging voltage providing module includes:
an inversion circuit configured to invert the first DC signal to output a first AC signal;
a parallel resonance circuit connected to an output end of the inversion circuit and configured to amplify the first AC signal of a certain frequency band;
a transformer circuit configured to boost a signal outputted by the parallel resonance circuit; and
a second rectification circuit configured to rectify the boosted signal to output the second DC signal.

In one embodiment, the inversion circuit is a half-bridge inversion circuit; the inversion circuit has an output end; the parallel resonance circuit comprises a resonance inductor L1 and a resonance capacitor C1; one end of the resonance inductor L1 is connected to the output end of the inversion circuit, the other end of the resonance inductor L1 is connected to one end of the resonance capacitor C1, and the other end of the resonance capacitor C1 is connected to a ground; and the end of the resonance inductor L1 connected to the resonance capacitor C1 outputs an amplified high-frequency AC voltage signal;

Alternatively, the inversion circuit is a full-bridge inversion circuit; the inversion circuit has a positive output end and a negative output end; the parallel resonance circuit includes a resonance inductor L1, a resonance inductor L2, a resonance capacitor C1 and a resonance capacitor C2; one end of the resonance inductor L1 is connected to the positive output end of the inversion circuit, the other end of the resonance inductor L1 is connected to one end of the resonance capacitor C1, and the other end of the resonance capacitor C1 is connected to a ground; one end of the resonance inductor L2 is connected to the negative output end of the inversion circuit, the other end of the resonance inductor L2 is connected to one end of the resonance capacitor C2, and the other end of the resonance capacitor C2 is connected to a ground; and, the end of the resonance inductor L1 connected to the resonance capacitor C1 outputs a positive amplified high-frequency AC voltage signal, and the end of the resonance inductor L2 connected to the resonance capacitor C2 outputs a negative amplified high-frequency AC voltage signal.

In one embodiment, the charging voltage providing module further includes:
a clamping circuit configured to clamp a voltage of the first AC signal to a preset voltage.

In one embodiment, the inversion circuit is a half-bridge inversion circuit; and, the clamping circuit comprises a clamping diode Z1 and a clamping diode Z2, an anode of the clamping diode Z1 and a cathode of the clamping diode Z2 are connected to the output end of the inversion circuit or an output end of the parallel resonance circuit, a cathode of the clamping diode Z1 is connected to a positive bus, and an anode of the clamping diode Z2 is connected to a negative bus;

Alternatively, the inversion circuit is a full-bridge inversion circuit; and, the clamping circuit comprises a clamping diode Z1, a clamping diode Z2, a clamping diode Z3 and a clamping diode Z4, an anode of the clamping diode Z1 and a cathode of the clamping diode Z2 are connected to a positive output end of the inversion circuit or a positive output end of the parallel resonance circuit, a cathode of the clamping diode Z1 is connected to a positive bus, an anode of the clamping diode Z2 is connected to a negative bus, an anode of the clamping diode Z3 and a cathode of the clamping diode Z4 are connected to a negative output end of the inversion circuit or a negative output end of the parallel resonance circuit, a cathode of the clamping diode Z3 is connected to the positive bus, and an anode of the clamping diode Z4 is connected to the negative bus.

In one embodiment, a capacitor charging circuit for charging capacitors in an energy storage capacitor group is provided, which may include:
a voltage conversion module configured to convert an AC signal inputted into a first DC signal for output;
a charging voltage providing module configured to perform a first voltage conversion on the first DC signal to output a second DC signal; wherein, the charging voltage providing module comprises an inversion circuit, a parallel resonance circuit, a transformer circuit and a second rectification circuit;
the inversion circuit is configured to invert the first DC signal to output a first AC signal;
the parallel resonance circuit is connected to an output end of the inversion circuit and configured to amplify the first AC signal of a certain frequency band;
the transformer circuit is configured to boost a signal outputted by the parallel resonance circuit; and
the second rectification circuit is configured to rectify the boosted signal to output the second DC voltage signal.

In one embodiment, the inversion circuit is a half-bridge inversion circuit; the inversion circuit has an output end; the parallel resonance circuit comprises a resonance inductor L1 and a resonance capacitor C1; one end of the resonance inductor L1 is connected to the output end of the inversion circuit, the other end of the resonance inductor L1 is connected to one end of the resonance capacitor C1, and the other end of the resonance capacitor C1 is connected to a ground; and the end of the resonance inductor L1 connected to the resonance capacitor C1 outputs an amplified high-frequency AC voltage signal;
alternatively, the inversion circuit is a full-bridge inversion circuit; the inversion circuit has a positive output end and a negative output end; the parallel resonance circuit includes a resonance inductor L1, a resonance inductor L2, a resonance capacitor C1 and a resonance capacitor C2; one end of the resonance inductor L1 is connected to the positive output end of the inversion circuit, the other end of the resonance inductor L1 is connected to one end of the resonance capacitor C1, and the other end of the resonance capacitor C1 is connected to a ground; one end of the resonance inductor L2 is connected to the negative output end of the inversion circuit, the other end of the resonance inductor L2 is connected to one end of the resonance capacitor C2, and the other end of the resonance capacitor C2 is connected to a ground; and, the end of the resonance inductor L1 connected to the resonance capacitor C1 outputs a positive amplified high-frequency AC voltage signal, and the end of the resonance inductor L2 connected to the resonance capacitor C2 outputs a negative amplified high-frequency AC voltage signal.

In one embodiment, the charging voltage providing module further includes:
a clamping circuit configured to clamp a voltage of the first AC signal to a preset voltage.

In one embodiment, the inversion circuit is a half-bridge inversion circuit; and, the clamping circuit comprises a clamping diode Z1 and a clamping diode Z2, an anode of the clamping diode Z1 and a cathode of the clamping diode Z2 are connected to the output end of the inversion circuit or an output end of the parallel resonance circuit, a cathode of the clamping diode Z1 is connected to a positive bus, and an anode of the clamping diode Z2 is connected to a negative bus;
alternatively, the inversion circuit is a full-bridge inversion circuit; and, the clamping circuit comprises a clamping diode Z1, a clamping diode Z2, a clamping diode Z3 and a clamping diode Z4, an anode of the clamping diode Z1 and a cathode of the clamping diode Z2 are connected to a positive output end of the inversion circuit or a positive output end of the parallel resonance circuit, a cathode of the clamping diode Z1 is connected to a positive bus, an anode of the clamping diode Z2 is connected to a negative bus, an anode of the clamping diode Z3 and a cathode of the clamping diode Z4 are connected to a negative output end of the inversion circuit or a negative output end of the parallel resonance circuit, a cathode of the clamping diode Z3 is connected to the positive bus, and an anode of the clamping diode Z4 is connected to the negative bus.

In one embodiment, the voltage conversion module is a power factor correction converter.

In one embodiment, the power factor correction converter includes:
a first rectification circuit configured to rectify the inputted AC signal;
a filtering circuit configured to filter the rectified signal; and
a voltage stabilization circuit configured to stabilize the filtered signal to output the first DC signal.

In one embodiment, a digital X-ray imaging system is provided, which may include:
a high-voltage generator of any one of the embodiments above, where the high-voltage generator is configured to generate a high-voltage signal;
an X-ray source configured to transmit X-rays when loaded with the high-voltage signal, wherein the X-rays are transmitted to a target being examined;
a detector configured to receive the X-rays that pass through the target being examined and convert the received X-rays into a digital image.

In the capacitor charging circuit, high-voltage generator and digital X-ray imaging system of the embodiments above, a power factor correction converter is provided at the input end of the high-voltage generator, which increases the range of the input AC voltage. The resonance circuit is designed as a parallel resonance circuit, by which a soft switching of the switch tube within a certain frequency range can be achieved. In addition, a clamping circuit is provided to perform voltage clamping, such that the switch tube can operate in zero voltage switching at any frequency, thereby further improving the reliability of the switch tube and improving the electromagnetic compatibility performance of the overall circuit.

### BRIEF DESCRIPTION OF THE DRAWINGS

FIG. 1 is a schematic diagram of an existing large-capacity capacitor charging circuit;
FIG. 2 is a schematic diagram of a digital X-ray imaging system of an embodiment;
FIG. 3 is a schematic diagram of a high-voltage generator of an embodiment;
FIG.4 is a schematic diagram of a power factor correction converter of an embodiment;
FIG. 5 is a schematic diagram of the circuit of a power factor correction converter of an embodiment;
FIG. 6 is a schematic diagram of a charging voltage supply module of an embodiment;
FIG. 7 is a schematic diagram of a charging voltage supply module of another embodiment;
FIG. 8 is a schematic diagram of the circuit of a charging voltage supply module of an embodiment;
FIG. 9 is a schematic diagram of the circuit of a charging voltage supply module of another embodiment;
FIG. 10 is a schematic diagram of a high-voltage conversion module of an embodiment;
FIG. 11 is a schematic diagram of an X-ray source of an embodiment;
FIG. 12 is a schematic diagram of a high-voltage generator of an embodiment;
FIG. 13 is a schematic diagram of a capacitor charging circuit of an embodiment; and
FIG. 14 is a schematic diagram of a capacitor charging circuit of another embodiment.

### DETAILED DESCRIPTION

The present disclosure will be described in detail below through specific embodiments in combination with the drawings, where similar elements in different embodiments will be assigned with similar reference numbers. In the embodiments below, the detailed description is intended to make the present disclosure to be better understood. However, those skilled in the art can easily recognize that some of the features can be omitted or be replaced by other elements, materials or methods in different situations. In some cases, some operations of the present disclosure will not be shown or described in the specification, which is to avoid the core part of the present disclosure being overwhelmed by too much description. For those skilled in the art, it is not necessary to describe these operations in detail. They can fully understand the operations based on the description in the specification and the general technical knowledge in the field.

In addition, the features, operations or characteristics described in the specification can be combined in any appropriate manner to form various embodiments. The steps or actions in the description of method can also be interchanged or adjusted in a manner that is obvious to those skilled in the art. Therefore, the various sequences in the specification and the drawings are merely for the purpose of clearly describing a certain embodiment, but do not mean necessary sequences, unless it is otherwise specified that a certain sequence must be followed.

The serial numbers of the components herein, such as "first", "second", etc., are merely used to distinguish the objects described and do not have any order or technical meaning. The "connection" and "coupling" herein, unless otherwise specified, include direct and indirect connections (couplings).

The present disclosure discloses a capacitor charging circuit, a high-voltage generator and a digital X-ray imaging system. In the present disclosure, a power factor correction converter is provided at the input end of the high-voltage generator, which increases the range of the input AC voltage. In view of the poor reliability of the switch tube in the capacitor charging circuit of the existing high-voltage generator, the resonance circuit is designed as a parallel resonance circuit, by which a soft switching of the switch tube within a certain frequency range can be achieved. In addition, a clamping circuit is provided to perform voltage clamping, such that the switch tube can operate in zero voltage switching (ZVS) at any frequency, thereby further improving the reliability of the switch tube and improving the electromagnetic compatibility performance of the overall circuit.

Referring to FIG. 2. the digital X-ray imaging system may include a high-voltage generator 101, an X-ray source 102 and a detector 103, which will be described in detail below.

The high-voltage generator 101 is configured to generate an excitation voltage. Referring to FIG. 3, the high-voltage generator 101 may include a power factor correction converter 11, a charging voltage providing module 12, an energy storage capacitor group 13 and a high voltage conversion module 14.

The power factor correction converter 11 is connected to the AC power grid and is configured to perform power factor correction conversion on the inputted AC power signal to output a first DC power signal. The high-voltage generator 101 is usually adapted to a voltage input of 220VAC±10%, while most of the voltage outputs of the global power grid are 100VAC~240VAC. Therefore, in the embodiments of the present disclosure, the power factor correction converter 11 is provided at the input end where the high-voltage generator 101 is connected to the AC power grid, which can increase the range of the input AC voltage adapted by the high-voltage generator 101.

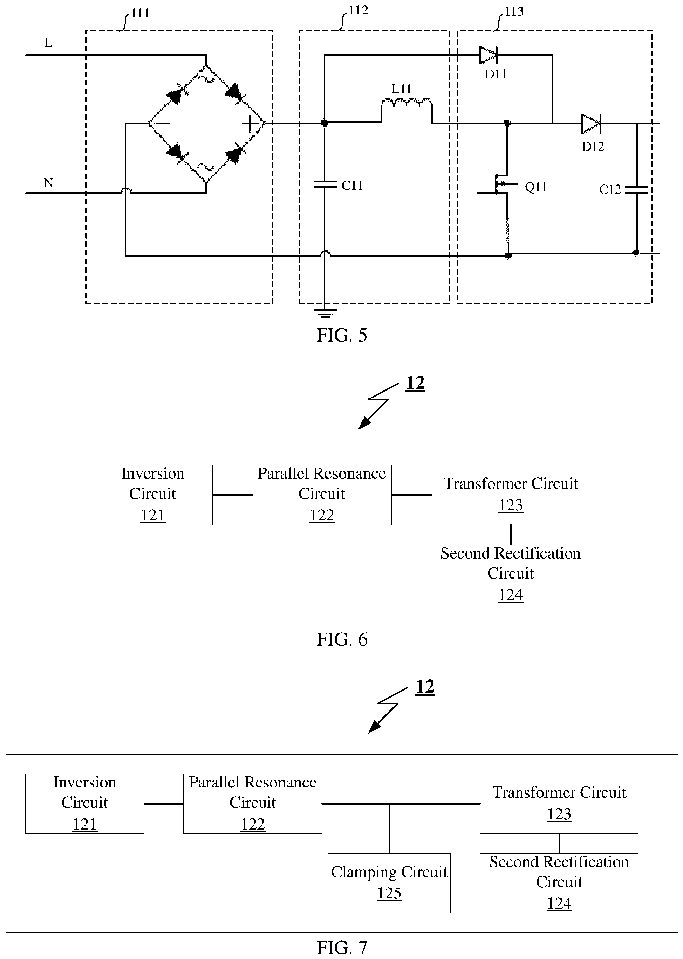

Referring to FIG. 4, the power factor correction converter 11 may include a first rectification circuit 111, a filtering circuit 112 and a voltage stabilization circuit 113. In one embodiment, referring to FIG. 5, the first rectification circuit 111 may be a rectification bridge circuit, which is connected to the live wire (L) and the neutral wire (N) of the AC power grid and is configured to rectify the AC power signal inputted from the AC power grid. The filtering circuit 112 is configured to filter the rectified signal. In one embodiment, the filtering circuit 112 may be implemented by a filtering capacitor. Alternatively, as shown in FIGS, the filtering circuit 112 may be implemented by an LC filtering circuit including a filtering inductor L11 and a filtering capacitor C11. The filtering capacitor C11 is connected between the positive output end and the negative output end of the first rectification circuit 111. One end of the filtering inductor L11 is connected to the positive output end of the first rectification circuit 111, and the other end of the filtering inductor L1 is configured to output the filtered signal. The voltage stabilization circuit 113 is configured to perform voltage stabilization on the filtered signal to output a first direct current signal. In one embodiment, the voltage stabilization circuit 113 may include a diode D11, a diode D12, a switch tube Q11 and a capacitor C12. The anode of the diode D11 is connected to the positive output end of the first rectification circuit 111. The cathode of the diode D11, the first end the switch tube Q11 and the anode of the diode D12 are connected to the output end of the filtering circuit 112. The second end of the switch tube Q11 is connected to the ground. The cathode of the diode D12 is connected to one end of the capacitor C12. The other end of the capacitor C12 is connected to the ground. The first direct current signal is outputted at the end connected to the cathode of the diode D12 and the capacitor C12. In the circuit above, the filtering capacitor C11 is connected in parallel with the filtering inductor L11. With the characteristic that the current on the filtering capacitor C11 leads the voltage, the lag of the current on the filtering inductor L1 can be compensated such that the overall characteristic is close to the resistance, thereby achieving power factor compensation. In addition, a stable output can be achieved through the voltage stabilization circuit 113 to output a first DC signal suitable for the voltage required for the high-voltage generator 101 to work.

The input end of the charging voltage providing module 12 is connected to the output end of the power factor correction converter 11, and is configured to perform a first voltage conversion on the first DC signal to output a second DC signal. The charging voltage providing module 12 inverts the first DC signal, boosts the inverted signal, and rectifies the boosted signal into the second DC signal.

In some embodiments, referring to FIG. 6, the charging voltage providing module 12 may include an inversion circuit 121, a parallel resonance circuit 122, a transformer circuit 123 and a second rectification circuit 124. The inversion circuit 121 is connected to the output end of the power factor correction converter 11, and is configured to invert the first DC signal to output a first AC signal. The inversion circuit 11 may be a full-bridge inversion circuit or a half-bridge inversion circuit, both of which may be implemented by switch tubes. The parallel resonance circuit 122 is connected to the output end of the inversion circuit 121, and is configured to amplify the first AC signal of a certain frequency band. The transformer circuit 123 is configured to boost the signal outputted by the parallel resonance circuit 122. The second rectification circuit 124 is configured to rectify the boosted signal to output the second DC signal. Therefore, in the embodiment of the present disclosure, the parallel resonance circuit 122 is provided at the output end of the inversion circuit 121, which can amplify the first AC signal of a certain frequency band outputted by the inversion circuit 121 to achieve a soft switching of the switch tubes in the inversion circuit 121 within a certain frequency range.

In some embodiments, referring to FIG. 7, the charging voltage providing module 12 may further include a clamping circuit 125. The clamping circuit 125 may be connected to the output end of the parallel resonance circuit 122, or may be connected to the output end of the inversion circuit 121 (not shown in the figure). The clamping circuit 125 is configured to clamp the voltage of the first AC signal to a preset voltage which is the bus voltage of the circuit, such that the switch tubes in the inversion circuit 121 operates at zero voltage switching at any operating frequency, thereby further improving the reliability of the circuit.

The inversion circuit 121 may be a full-bridge inversion circuit or a half-bridge inversion circuit. The circuit structure and working principle of the charging voltage providing module 12 will be described below for two different types of inversion circuits.

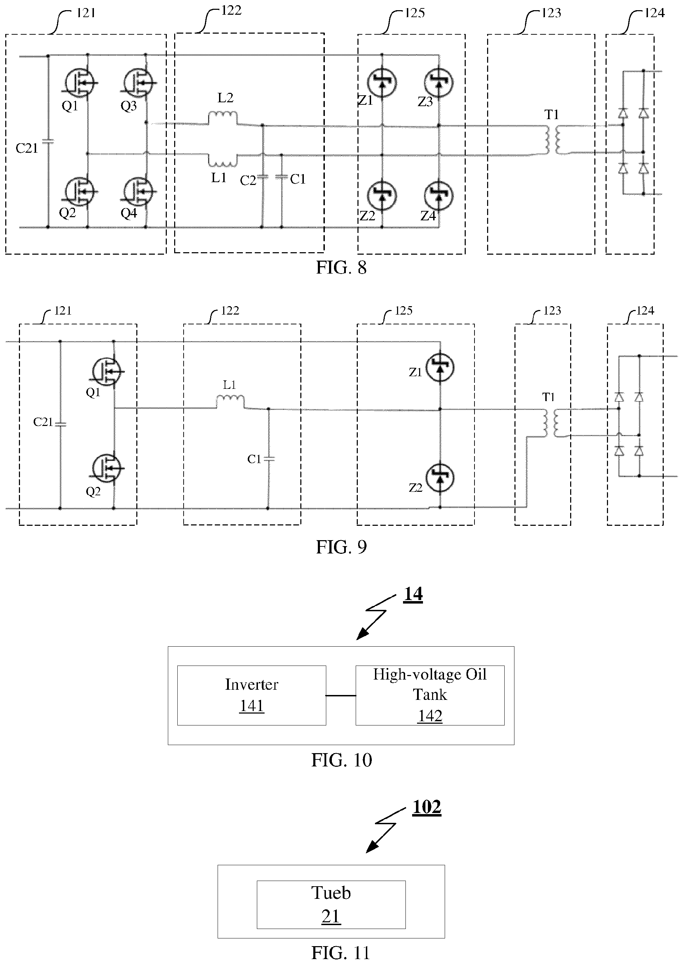

Referring to FIG. 8, the inversion circuit 121 is a full-bridge inversion circuit, which includes a capacitor C21, a switch tube Q1, a switch tube Q2, a switch tube Q3 and a switch tube Q4. One end of the capacitor C21 is connected to the output end (+) of the power factor correction converter 11, and the other end of the capacitor C21 is connected to the output end (-) of the power factor correction converter 11, that is, connected to the ground. The first end of the switch tube Q1 and the first end of the switch tube Q3 are connected to the output end (+) of the power factor correction converter 11. The second end of the switch tube Q1 is connected to the first end of the switch tube Q2. The second end of the switch tube Q3 is connected to the first end of the switch tube Q4. The second end of the switch tube Q2 and the second end of the switch tube Q4 are connected to the output end (-) of the power factor correction converter 11. The end of the switch tube Q1 connected with the switch tube Q2 is the negative output end of the full-bridge inversion circuit, and the end of the switch tube Q3 connected with the switch tube Q4 is the positive output end of the full-bridge inversion circuit.

The parallel resonance circuit 122 includes a resonant inductor L1, a resonant inductor L2, a resonant capacitor C1 and a resonant capacitor C2. One end of the resonant inductor L1 is connected to the positive output end of the inversion circuit 121, the other end of the resonant inductor L1 is connected to one end of the resonant capacitor C1, and the other end of the resonant capacitor C1 is connected to the ground. One end of the resonant inductor L2 is connected to the negative output end of the inversion circuit 121, the other end of the resonant inductor L2 is connected to one end of the resonant capacitor C2, and the other end of the resonant capacitor C2 is connected to the ground. A positive amplified high-frequency AC voltage signal is outputted at the end of the resonant inductor L1 connected with the resonant capacitor C1, and a negative amplified high-frequency AC voltage signal is outputted at the end of the resonant inductor L2 connected with the resonant capacitor C2. It can be seen that the signal outputted from the positive output end of the inversion circuit 121 undergoes parallel resonance through a circuit including the resonant inductor L1 and the resonant capacitor C1, and the signal outputted from the negative output end of the inversion circuit 121 undergoes parallel resonance through a circuit including the resonant inductor L2 and the resonant capacitor C2. Therefore, each output of the full-bridge inversion circuit undergoes parallel resonance through a circuit including a resonant inductor and a resonant capacitor. The parallel resonance can charge the capacitors in the subsequent energy storage capacitor group 13 at an approximately constant current, and realize the soft switching of the switch tubes in the inversion circuit 121 within a certain frequency range.

The transformer circuit 123 may include a transformer T1. The primary coil of the transformer T1 is connected to the output end of the parallel resonance circuit 122, and the secondary coil of the transformer T1 is connected to the second rectification circuit 124.

The second rectification circuit 124 may be a rectification bridge circuit, which is configured to rectify the AC signal boosted by the transformer circuit 123 into the second DC signal.

The clamping circuit 125 includes a clamping diode Z1, a clamping diode Z2, a clamping diode Z3 and a clamping diode Z4. The anode of the clamping diode Z1 and the cathode of the clamping diode Z2 are connected to the positive output end of the inversion circuit 121, the cathode of the clamping diode Z1 is connected to the positive bus, and the anode of the clamping diode Z2 is connected to the negative bus. The anode of the clamping diode Z3 and the cathode of the clamping diode Z4 are connected to the negative output end of the inversion circuit 121, the cathode of the clamping diode Z3 is connected to the positive bus, and the anode of the clamping diode Z4 is connected to the negative bus. In the circuit above, the clamping circuit 125 is connected to the positive output end and the negative output end of the inversion circuit 121. In other embodiments, the clamping circuit 125 may also be connected to the positive output end and the negative output end of the parallel resonance circuit 122. Specifically, the anode of the clamping diode Z1 and the cathode of the clamping diode Z2 may be connected to the positive output end of the parallel resonance circuit, the anode of the clamping diode Z3 and the cathode of the clamping diode Z4 may be connected to the negative output end of the parallel resonance circuit, and the other portions of the circuit may be the same as those shown in FIG. 7.

Referring to FIG. 9, the inversion circuit 121 is a half-bridge inversion circuit. The half-bridge inversion circuit includes a capacitor C21, a switch tube Q1 and a switch tube Q2. One end of the capacitor C21 is connected to the output end (+) of the power factor correction converter 11, and the other end of the capacitor C21 is connected to the output end (-) of the power factor correction converter 11, that is, connected to the ground. The first end of the switch tube Q1 is connected to the output end (+) of the power factor correction converter 11, the second end of the switch tube Q1 is connected to the first end of the switch tube Q2, and the second end of the switch tube Q2 is connected to the output end (-) of the power factor correction converter 11. The end of the switch tube Q1 connected with the switch tube Q2 is the output end of the half-bridge inversion circuit.

The parallel resonance circuit 122 includes a resonant inductor L1 and a resonant capacitor C1. One end of the resonant inductor L1 is connected to the output end of the inversion circuit 121, the other end of the resonant inductor L1 is connected to one end of the resonant capacitor C1, and the other end of the resonant capacitor C1 is connected to the ground. The end of the resonant inductor L1 connected with the resonant capacitor C1 outputs the amplified high-frequency AC voltage signal. It can be seen that the signal outputted from the output end of the inversion circuit 121 undergoes parallel resonance through a circuit including the resonant inductor L1 and the resonant capacitor C1. The parallel resonance can charge the capacitors in the subsequent energy storage capacitor group 13 at an approximately constant current and realize soft switching of the switch tubes in the inversion circuit 121 within a certain frequency range.

The structure of the transformer circuit 123 and the second rectification circuit 124 may be similar to the circuit in the embodiments above and will not be described again here.

The clamping circuit 125 includes a clamping diode Z1 and a clamping diode Z2. The anode of the clamping diode Z1 and the cathode of the clamping diode Z2 are connected to the output end of the inversion circuit 121. The cathode of the clamping diode Z1 is connected to the positive bus, and the anode of the clamping diode Z2 is connected to the negative bus. For a half-bridge inversion circuit, the negative bus is equivalent to the ground in the circuit. In the clamping circuit 125 above, the clamping circuit 125 is connected to the output end of the inversion circuit 121. In other embodiments, the clamping circuit 125 may also be connected to the output end of the parallel resonance circuit 122. Specifically, the anode of the clamping diode Z1 and the cathode of the clamping diode Z2 may be connected to the output end of the parallel resonance circuit, and the other portions of the circuit may be the same as those shown in FIG. 8.

The energy storage capacitor group 13 may include multiple energy storage capacitors, which are configured to store energy for the second DC signal to obtain a third DC signal. The energy storage capacitor group 13 may include one energy storage capacitor or multiple energy storage capacitors. In the case that the energy storage capacitor group 13 include multiple energy storage capacitors, the energy storage capacitor group 13 is usually a series-parallel combination of multiple energy storage capacitors. Some energy storage capacitor groups 13 can also change their capacitance values through a conversion switch.

Since the voltage of the second DC signal that the charging voltage providing circuit 12 is able to provide can be very high, when the exposure is not desired, the energy storage capacitor group 13 will maintain high voltage and store sufficient energy. When the exposure is desired, the energy storage capacitor group 13 can provide power for the high-voltage conversion module 14 and provide high-power energy for the exposure of the tube in the X-ray source 102.

The high-voltage conversion module 14 may obtain the third direct current signal from the energy storage capacitor group 13, and perform a second voltage conversion process on the third direct current signal to obtain a high-voltage signal. The high-voltage signal may be loaded to the X-ray source 102 to make the X-ray source 102 to transmit X-rays.

In some embodiments, referring to FIG. 10, the high-voltage conversion module 14 includes an inverter 141 and a high-voltage oil tank 142. The input end of the inverter 141 is connected to the energy storage capacitor group 13, and the output end of the inverter 141 is connected to the high-voltage oil tank 142. The inverter 141 is configured to obtain power from the energy storage capacitor group 13, and output high-frequency alternating current to the high-voltage oil tank 142 after inversion. For example, 20kHz high-frequency power supply may be obtained by the inversion and be inputted to the high-voltage oil tank 142. The high-voltage oil tank 142 is configured as a high-voltage generating device usually for loading an excitation voltage to the X-ray source 102. In other embodiments, the high-voltage generating device may also generate high voltage by other means or devices.

In some embodiments, referring to FIG. 11, the X-ray source 102 includes a tube 21, which is connected to the high-voltage oil tank 142 and configured to generate X-rays under the action of the excitation voltage.

In some embodiments, the high-voltage generator 101 may also include a control circuit. The control circuit is connected to the tube 21 in the X-ray source 102 and the inverter 141 in the high-voltage generator 101, and is configured to control the inverter to work according to the exposure request, that is, to obtain high-voltage direct current from the energy storage capacitor group 13 and output high-frequency alternating current after inversion. The control circuit is also connected to the tube 21. The voltage and current outputted by the tube 21 are fed back to the control circuit and compared with the voltage value and current value set in the control circuit to control and adjust the exposure outputted by the tube 21.

The detector 103 is configured to receive the X-rays passing through the target being detected and convert the received X-rays into a digital image. The detector 103 may include a ray conversion layer and a TFT matrix layer. The ray conversion layer is configured to convert radioactive rays such as X-rays into visible light. The ray conversion layer generally includes a scintillation layer or a fluorescent layer for converting the rays into visible light. Taking the scintillation layer as an example, it may generally be made of scintillation material, such as cesium iodide (CsI) or gadolinium oxysulfide (GOS), etc. The TFT matrix layer is configured to sense the visible light converted by the ray conversion layer and convert the visible light into electrical signals for image information acquisition.

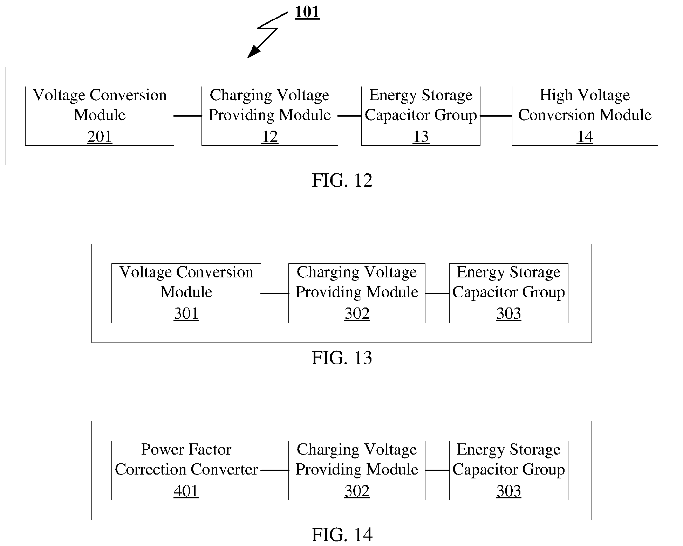

In some embodiments, referring to FIG. 12, the power factor correction converter 11 in the high-voltage generator 101 of the digital X-ray imaging system may be replaced by a voltage conversion module 201 with an AC-DC function. The voltage conversion module 201 is configured to convert the inputted AC signal into a first DC signal for output. In one embodiment, the voltage conversion module 201 may rectify the AC signal through a rectification bridge to obtain the first DC signal for output.

Referring to FIG. 13, an embodiment of the present disclosure provides a capacitor charging circuit configured to charge the capacitors in the energy storage capacitor group 303. The capacitor charging circuit includes a voltage conversion module 301 and a charging voltage providing module 302. The voltage conversion module 301 is connected to an AC power supply. The output end of the voltage conversion module 301 is connected to the input end of the charging voltage providing module 302, and the output end of the charging voltage providing module 302 is connected to the energy storage capacitor group 303.

The voltage conversion module 301 is configured to convert the inputted AC signal into a first DC signal for output. In some embodiments, the voltage conversion module 301 may be a power factor correction converter.

The charging voltage providing module 302 is configured to perform a first voltage conversion process on the first DC signal to output a second DC signal. The second DC signal is used to charge the energy storage capacitor group 303.

In some embodiments, referring to FIG. 14, the voltage conversion module 301 in the capacitor charging circuit may be replaced by a power factor correction converter 401. The power factor correction converter 401 can perform power factor compensation and output stabilization in addition to the AC-DC function to increase the range of the inputted AC voltage suitable for the capacitor charging circuit.

It should be noted that the specific implementations of the modules in the capacitor charging circuits above has been described in detail in the embodiment above and will not be described here again.

The specific examples have been described to illustrate the present disclosure, which is merely to help understand, but not intended to limit, the present disclosure. For those skilled in the art, several simple deductions, amendments or replacements can be made according to the idea of the present disclosure.

## Claims

1. A high-voltage generator for a digital X-ray imaging system, comprising:
a power factor correction converter configured to perform a power factor correction conversion on an inputted AC signal to output a first DC signal;
a charging voltage providing module configured to perform a first voltage conversion on the first DC signal to output a second DC signal;
an energy storage capacitor group configured to store energy for the second DC signal to provide a third DC signal; and
a high voltage conversion module configured to obtain the third DC signal from the energy storage capacitor group and perform a second voltage conversion on the third DC signal to obtain a high voltage signal, wherein the high voltage signal is loaded to an X-ray source to make the X-ray source to transmit X-rays.

2. The high-voltage generator of claim 1, wherein the power factor correction converter comprises:
a first rectification circuit configured to rectify the inputted AC signal;
a filtering circuit configured to filter the rectified signal; and
a voltage stabilization circuit configured to stabilize the filtered signal to output the first DC signal.

3. The high-voltage generator of any one of claims 1 to 2, wherein the charging voltage providing module comprises:
an inversion circuit configured to invert the first DC signal to output a first AC signal;
a parallel resonance circuit connected to an output end of the inversion circuit and configured to amplify the first AC signal of a certain frequency band;
a transformer circuit configured to boost a signal outputted by the parallel resonance circuit; and
a second rectification circuit configured to rectify the boosted signal to output the second DC signal.

4. The high-voltage generator of claim 3, wherein,
the inversion circuit is a half-bridge inversion circuit; the inversion circuit has an output end; the parallel resonance circuit comprises a resonance inductor L1 and a resonance capacitor C1; one end of the resonance inductor L1 is connected to the output end of the inversion circuit, the other end of the resonance inductor L1 is connected to one end of the resonance capacitor C1, and the other end of the resonance capacitor C1 is connected to a ground; and the end of the resonance inductor L1 connected to the resonance capacitor C1 outputs an amplified high-frequency AC voltage signal;
or,
the inversion circuit is a full-bridge inversion circuit; the inversion circuit has a positive output end and a negative output end; the parallel resonance circuit includes a resonance inductor L1, a resonance inductor L2, a resonance capacitor C1 and a resonance capacitor C2; one end of the resonance inductor L1 is connected to the positive output end of the inversion circuit, the other end of the resonance inductor L1 is connected to one end of the resonance capacitor C1, and the other end of the resonance capacitor C1 is connected to a ground; one end of the resonance inductor L2 is connected to the negative output end of the inversion circuit, the other end of the resonance inductor L2 is connected to one end of the resonance capacitor C2, and the other end of the resonance capacitor C2 is connected to a ground; and, the end of the resonance inductor L1 connected to the resonance capacitor C1 outputs a positive amplified high-frequency AC voltage signal, and the end of the resonance inductor L2 connected to the resonance capacitor C2 outputs a negative amplified high-frequency AC voltage signal.

5. The high-voltage generator of any one of claims 1 to 4, wherein the charging voltage providing module further comprises:
a clamping circuit configured to clamp a voltage of the first AC signal to a preset voltage.

6. The high-voltage generator of claim 5, wherein,
the inversion circuit is a half-bridge inversion circuit; and, the clamping circuit comprises a clamping diode Z1 and a clamping diode Z2, an anode of the clamping diode Z1 and a cathode of the clamping diode Z2 are connected to the output end of the inversion circuit or an output end of the parallel resonance circuit, a cathode of the clamping diode Z1 is connected to a positive bus, and an anode of the clamping diode Z2 is connected to a negative bus;
or,
the inversion circuit is a full-bridge inversion circuit; and, the clamping circuit comprises a clamping diode Z1, a clamping diode Z2, a clamping diode Z3 and a clamping diode Z4, an anode of the clamping diode Z1 and a cathode of the clamping diode Z2 are connected to a positive output end of the inversion circuit or a positive output end of the parallel resonance circuit, a cathode of the clamping diode Z1 is connected to a positive bus, an anode of the clamping diode Z2 is connected to a negative bus, an anode of the clamping diode Z3 and a cathode of the clamping diode Z4 are connected to a negative output end of the inversion circuit or a negative output end of the parallel resonance circuit, a cathode of the clamping diode Z3 is connected to the positive bus, and an anode of the clamping diode Z4 is connected to the negative bus.

7. A high-voltage generator for a digital X-ray imaging system, comprising:
a voltage conversion module configured to convert an AC signal inputted into a first DC signal for output;
a charging voltage providing module configured to perform a first voltage conversion on the first DC signal to output a second DC signal; wherein, the charging voltage providing module comprises an inversion circuit, a parallel resonance circuit, a transformer circuit and a second rectification circuit, the inversion circuit is configured to invert the first DC signal to output a first AC signal, the parallel resonance circuit is connected to an output end of the inversion circuit and configured to amplify the first AC signal of a certain frequency band, the transformer circuit is configured to boost a signal outputted by the parallel resonance circuit, and the second rectification circuit is configured to rectify the boosted signal to output the second DC voltage signal;
an energy storage capacitor group configured to store energy for the second DC signal to provide a third DC signal; and
a high-voltage conversion module configured to obtain the third DC signal from the energy storage capacitor group and perform a second voltage conversion on the third DC signal to obtain a high-voltage signal that is loaded into the X-ray source to make the X-ray source to transmit X-rays.

8. The high-voltage generator of claim 7, wherein,
the inversion circuit is a half-bridge inversion circuit; the inversion circuit has an output end; the parallel resonance circuit comprises a resonance inductor L1 and a resonance capacitor C1; one end of the resonance inductor L1 is connected to the output end of the inversion circuit, the other end of the resonance inductor L1 is connected to one end of the resonance capacitor C1, and the other end of the resonance capacitor C1 is connected to a ground; and the end of the resonance inductor L1 connected to the resonance capacitor C1 outputs an amplified high-frequency AC voltage signal;
or,
the inversion circuit is a full-bridge inversion circuit; the inversion circuit has a positive output end and a negative output end; the parallel resonance circuit includes a resonance inductor L1, a resonance inductor L2, a resonance capacitor C1 and a resonance capacitor C2; one end of the resonance inductor L1 is connected to the positive output end of the inversion circuit, the other end of the resonance inductor L1 is connected to one end of the resonance capacitor C1, and the other end of the resonance capacitor C1 is connected to a ground; one end of the resonance inductor L2 is connected to the negative output end of the inversion circuit, the other end of the resonance inductor L2 is connected to one end of the resonance capacitor C2, and the other end of the resonance capacitor C2 is connected to a ground; and, the end of the resonance inductor L1 connected to the resonance capacitor C1 outputs a positive amplified high-frequency AC voltage signal, and the end of the resonance inductor L2 connected to the resonance capacitor C2 outputs a negative amplified high-frequency AC voltage signal.

9. The high-voltage generator of any one of claims 7 to 8, wherein the charging voltage providing module further comprises:
a clamping circuit configured to clamp a voltage of the first AC signal to a preset voltage.

10. The high-voltage generator of claim 9, wherein,
the inversion circuit is a half-bridge inversion circuit; and, the clamping circuit comprises a clamping diode Z1 and a clamping diode Z2, an anode of the clamping diode Z1 and a cathode of the clamping diode Z2 are connected to the output end of the inversion circuit or an output end of the parallel resonance circuit, a cathode of the clamping diode Z1 is connected to a positive bus, and an anode of the clamping diode Z2 is connected to a negative bus;
or,
the inversion circuit is a full-bridge inversion circuit; and, the clamping circuit comprises a clamping diode Z1, a clamping diode Z2, a clamping diode Z3 and a clamping diode Z4, an anode of the clamping diode Z1 and a cathode of the clamping diode Z2 are connected to a positive output end of the inversion circuit or a positive output end of the parallel resonance circuit, a cathode of the clamping diode Z1 is connected to a positive bus, an anode of the clamping diode Z2 is connected to a negative bus, an anode of the clamping diode Z3 and a cathode of the clamping diode Z4 are connected to a negative output end of the inversion circuit or a negative output end of the parallel resonance circuit, a cathode of the clamping diode Z3 is connected to the positive bus, and an anode of the clamping diode Z4 is connected to the negative bus.

11. The high-voltage generator of any one of claims 7 to 10, wherein the voltage conversion module is a power factor correction converter.

12. The high-voltage generator of claim 11, wherein the power factor correction converter comprises:
a first rectification circuit configured to rectify the inputted AC signal;
a filtering circuit configured to filter the rectified signal; and
a voltage stabilization circuit configured to stabilize the filtered signal to output the first DC signal.

13. A digital X-ray imaging system, comprising:
a high-voltage generator of any one of claims 1 to 12, wherein the high-voltage generator is configured to generate a high-voltage signal;
an X-ray source configured to transmit X-rays when loaded with the high-voltage signal, wherein the X-rays are transmitted to a target being examined;
a detector configured to receive the X-rays that pass through the target being examined and convert the received X-rays into a digital image.
